# EUROPEAN PATENT APPLICATION

(11) **EP 4 546 917 A1**
(43) Date of publication of application: **30.04.2025**
(21) Application number: 23851298.2
(22) Date of filing: 15.05.2023
(51) Int. Cl.: H04W 72/04, H04B 7/06

(54) **BEAM CONFIGURATION METHOD AND APPARATUS, STORAGE MEDIUM, AND PROGRAM PRODUCT**

(30) Priority: 08.08.2022 CN 202210943520
(71) Applicant: ZTE Corporation, Shenzhen, Guangdong 518057 (CN)
(72) Inventor: YU, Hongkang, Shenzhen, Guangdong 518057 (CN); CHEN, Yijian, Shenzhen, Guangdong 518057 (CN); YE, Xinquan, Shenzhen, Guangdong 518057 (CN)
(74) Representative: Ziebig Hengelhaupt Intellectual Property Attorneys Patentanwaltskanzlei PartGmbB
(86) International application number: PCT/CN2023/094341
(87) International publication number: WO 2024/032068

(57) **Abstract**

Embodiments of the present application provide a beam configuration method and apparatus, a storage medium, and a program product. The method comprises: acquiring target information transmitted by a first communication node for beam configuration; generating target beam configuration information according to the target information; and performing beam configuration according to the target beam configuration information.

## Description

### CROSS REFERENCE TO RELATED APPLICATION

The present application is based on and claims priority to Chinese Patent Application No. 202210943520.0, filed on August 08 2022, the entirety of which is incorporated herein by reference.

### TECHNICAL FIELD

Embodiments of the present application relate to the field of communication technology, in particular to a beam configuration method and apparatus, a storage medium and a computer program product.

### BACKGROUND

In future mobile communication networks, densely deployed communication nodes are considered as an effective means for increasing the system capacity, in which user equipment (UE) can be collaboratively served by a plurality of communication nodes. For example, an access point (AP) serving as a communication node generally needs to perform beam training to determine an optimal beam direction for serving UE. In order to avoid interference during beam training by different APs, it is necessary to allocate wireless resources orthogonal to each other to the APs, which will cause larger overhead of beam training. Therefore, how to reduce the overhead of beam training is an urgent issue that needs to be discussed and solved.

### SUMMARY

Embodiments of the present application provide a beam configuration method, apparatus, and a storage medium, which is intended to reduce the overhead of beam training.

In a first aspect, an embodiment of the present application provides a beam configuration method, the method includes: acquiring target information transmitted by a first communication node for beam configuration; generating target beam configuration information according to the target information; and performing beam configuration according to the target beam configuration information.

In a second aspect, an embodiment of the present application provides a beam configuration method, the method includes: transmitting target information for beam configuration to a second access point, such that the second access point performs beam configuration according to second beam configuration information; wherein the second beam configuration information is obtained according to the target information.

In a third aspect, an embodiment of the present application provides a beam configuration apparatus, the apparatus includes: at least one processor, and at least one memory for storing at least one program, wherein the at least one program, when executed by the at least one processor, implements the beam configuration method of the first aspect or the second aspect.

In a fourth aspect, an embodiment of the present application provides a computer-readable storage medium, which stores computer-executable instructions, wherein the computer-executable instructions are used to execute the beam configuration method of the first aspect or the second aspect.

In a fifth aspect, a computer program product includes a computer program or computer instruction, wherein the computer program or the computer instruction is stored in a computer-readable storage medium, a processor of a computer device reads the computer program or the computer instruction from the computer-readable storage medium, and the processor executes the computer program or the computer instruction, such that the computer device executes the beam configuration method of the first aspect or the second aspect.

In embodiments of the present application, a second access point generates the target beam configuration information according to the target information transmitted by the first communication node for beam configuration rather than performing beam training independently, which can effectively reduce the overhead of beam training during beam configuration.

### BRIEF DESCRIPTION OF DRAWINGS

FIG. 1 is a schematic diagram of an AP performing beam training on a terminal in some cases;
FIG. 2 is a schematic diagram of an AP performing beam training on a terminal in some cases;
FIG. 3 is a schematic architecture diagram of a communication system to which an embodiment of the present application is applied;
FIG. 4 is a flow chart of a beam configuration method provided by an embodiment of the present application;
FIG. 5 is a flow chart of determining second beam configuration information provided by an embodiment of the present application;
FIG. 6 is a flow chart of determining a target pilot provided by an embodiment of the present application;
FIG. 7 is a schematic diagram of the whole process of a beam configuration method provided by an embodiment of the present application;
FIG. 8 is a schematic diagram of the whole process of a beam configuration method provided by another embodiment of the present application;
FIGS. 9a-9d are schematic diagrams of specific application scenarios of a beam configuration method of embodiments of the present application; and
FIG. 10 is a schematic structural diagram of a beam configuration apparatus provided by an embodiment of the present application.

### DETAILED DESCRIPTION

In order to clarify the objectives, technical solutions and advantages of the present application, the present application will be further explained in detail below in conjunction with the accompanying drawings and embodiments. It should be understood that the specific embodiments described here are merely used to illustrate the present application and not intended to be limiting.

It should be noted that although an apparatus is divided into functional modules in a schematic diagram and a logical order is shown in a flow chart, in some cases, the apparatus can be divided into other functional modules and the steps can be performed in an order different from that shown or described in the flowchart. The terms "first", "second", and the like in the description and in the claims are used to distinguish similar objects rather than necessarily describing a specific sequence or order.

In future mobile communication systems, deploying APs densely in different geographical locations is a potential form of network, in which UE can be served collaboratively by a plurality of neighboring APs. This approach increases the available spatial degrees of freedom and helps improving the spectral efficiency. Meanwhile, the macro diversity gain of an AP can effectively ensure the reliability of a communication link. Therefore, techniques related to this concept such as Distributed Multi-input Multi-output (D-MIMO) and Cell-Free are attracting attention in the industry.

In order to improve the receiving performance of UE, an AP generally uses beamforming technology for signal transmission, in which the AP needs beam training so as to determine an optimal beam direction. In some cases, an AP transmits a finite number of beams with different directions at first, and each beam carries pre-defined pilot information. UE measures pilot signals and back feeds beam indication information to the AP, such that the AP is provided with reference for beam selection. During this process, pilots transmitted by training beams occupy wireless resources orthogonal to each other, and the overall overhead is proportional to the number of training beams. In order to reduce the overhead, in some other cases a level codebook based beam training scheme is proposed, in which training beams from wide to narrow are transmitted at different stages. This scheme reduces the number of training beams by means of binary search, but performs poorly and increases feedback latency in the case of low signal-to-noise ratio.

For an existing network architecture, since each AP performs the beam training process independently, UE is mostly served by only a single AP and APs are relatively sparsely distributed, the problem of interference among training beams of different APs is not serious. However, in a scenario where UE is served collaboratively by a plurality of APs and the APs are densely deployed, interference among training beams can significantly affect the accuracy of beam alignment. Therefore, it is necessary to allocate pilot resources orthogonal to each other to APs for beam training. If each AP still performs beam training independently in a traditional way, the overhead of training will increase exponentially with increase of the number of collaborative APs.

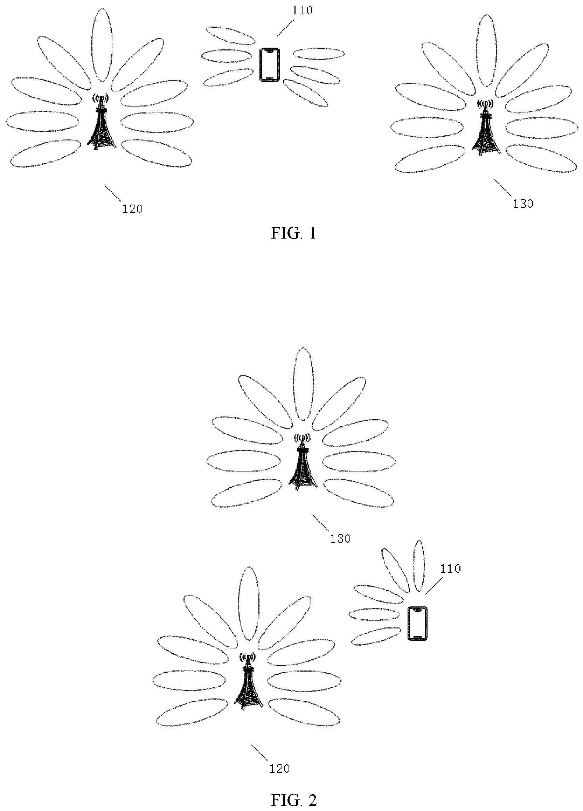

FIG. 1 is a schematic diagram of an AP performing beam training on a terminal in some cases. As shown in the figure, a base station 120 firstly transmits beams in various directions, and each beam carries pre-defined pilot information; a terminal 110 measures a pilot signal, selects a beam with relatively good transmission effect, and feeds back a selection result to the base station 120; at this point, the base station 120 completes beam training. Since a base station 130 also collaborates to provide service to the terminal 110, the base station 130 repeats the beam training process of the base station 120. Such a beam training approach results in low efficiency and high overhead of training.

FIG. 2 is a schematic diagram of an AP performing beam training on a terminal in some cases. As shown in the figure, the difference between FIG. 2 and FIG. 1 lies in that, since the base station 120 is relatively close to the base station 130, there may be mutual interference among training beams during training on the terminal 110, which affects beam alignment. Therefore, it is necessary to allocate orthogonal pilot resources orthogonal to each other to the base station 120 and the base station 130 for beam training, which will result in high overhead of training.

On such basis, an embodiment of the present application provides a beam configuration method and apparatus, a storage medium, and a program product. In the beam configuration method, a second access point needs not to perform beam training independently, instead, the second access point generates target beam configuration information according to target information for beam configuration transmitted by the first communication node, which can effectively reduce the overhead of beam training during the beam configuration process.

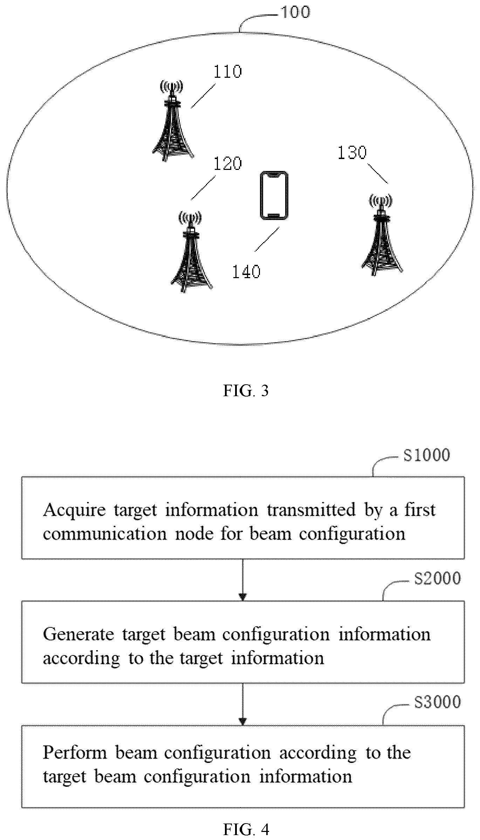

FIG. 3 is a schematic architecture diagram of a communication system to which an embodiment of the present application is applied. As shown in FIG. 3, the communication system 100 may include network devices 110-130 and a terminal 140. A network device may support a plurality of access technologies and provide various services to a terminal device by a plurality of access technologies.

Embodiments of the present application may be applied to various wireless communication systems, such as Global System of Mobile Communication (GSM) system, Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, Universal Mobile Telecommunication System (UMTS), 5G, Beyond Fifth Generation (B5G), 6th Generation (6G) system, etc.

The network devices 110-130 serve as access points, which may be evolutional Nodes B (eNB or eNodeB) in LTE; or base stations, broadband network gateways (BNGs), aggregation switches, or non-3rd generation partnership project (3GPP) access device in a 5G network or future evolved public land mobile network (PLMNs), which is not specifically limited in the embodiments of the present application. Optionally, a base station in the embodiments of the present application may include various forms of base stations, such as macro base station, micro base station (also known as small station), relay station, access point, next-generation base station (gNodeB, gNB), transmitting and receiving point (TRP), transmitting point (TP), mobile switching center, and a device that serves as a base station in device-to-device (D2D), vehicle-to-everything (V2X), machine-to-machine (M2M) communication, which is not specifically limited in the embodiments of the present application.

The Terminal 140 may include various hand-held devices, on-board devices, wearable devices, computing devices, or other processing devices connected to a wireless modem that have wireless communication functions, etc. For example, the terminal 130 may be a Personal Communication Service (PCS) phone, cordless phone, Session Initiation Protocol (SIP) phone, Wireless Local Loop (WLL) station, Personal Digital Assistant (PDA), etc. A terminal may also be known as a Subscriber Unit, Subscriber Station, Mobile Station, Mobile, Remote Station, Access Point, Remote Terminal, Access Terminal, User Terminal, User Agent, User Device, or User Equipment. For ease of description, the devices mentioned above are collectively referred to as terminals. The access network device 120 and the terminal 130 communicate with each other by certain air interface technology, such as Uu interface.

FIG. 4 is a flow chart of a beam configuration method provided by an embodiment of the present application. As shown in FIG. 4, the beam configuration method may include, but is not limited to, step S1000, step S2000, and step S3000.

At step S1000: target information transmitted by a first communication node for beam configuration is acquired.

At step S2000: target beam configuration information is generated according to the target information.

It should be illustrated that the first communication node may be either an access point or a terminal. The target information for beam configuration may include training beam related information, beam selection information, feedback information, etc. The training beam related information and the beam selection information are transmitted by an access point, and the feedback information is sent by a terminal.

In one embodiment, the first communication node is a first access point. The target information for beam configuration includes all training beam related information configured by the first access point and first location information of the first access point, and the training beam related information primarily includes information such as angle and direction of each beam of the first access point. The first access point transmits the training beam related information and the first location information to a current access point, the training beam related information and the first location information can be used help the current access point to determine a possible location range of the terminal, so as to generate target beam configuration information corresponding to the current access point in more targeted way, and improve the efficiency of beam training of the current access point.

In one embodiment, the first communication node is a first access point. The target information for beam configuration includes all training beam related information configured by the first access point and first location information of the first access point, the training beam related information primarily includes information such as angle and direction of each beam of the first access point. The first access point transmits the training beam related information and the first location information to a current access point, the training beam related information and the first location information can be used to accurately determine the location of the terminal, the current access point can directly determine the target beam configuration information thereof, so as to omit the beam training process, and improve the efficiency of beam configuration.

In the above two embodiments where the first communication node is the first access point, since the target information directly includes all training beam related information configured by the first access point and the first location information of the first access point, the current access point can obtain the beam training related information immediately after the first access point starts beam training, rather than performing beam configuration after the terminal feeds back a beam training result of the first access point, which can reduce latency and improve the efficiency of beam configuration.

In one embodiment, the first communication node is a first access point. The target information for beam configuration includes beam selection information and the first location information of the access point, the beam selection information refers to the direction, identification and the like of the beam finally selected by the first access point according to the feedback from the terminal. The first access point transmits the training beam selection information and the first location information to a current access point, the beam selection information and the first location information can be used to help the current access point to determine a possible location range of the terminal, so as to generate target beam configuration information corresponding to the current access point in a more targeted way, and improve the efficiency of beam training of the current access point.

In one embodiment, the first communication node is a first access point. The target information for beam configuration includes beam selection information and the first location information of the access point, the beam selection information refers to the direction, identification and the like of the beam finally selected by the first access point according to the feedback from the terminal. The first access point transmits the training beam selection information and the first location information to a current access point, the beam selection information and the first location information can be used to help the current access point to accurately determine the location of the terminal, and the target beam configuration information of the current access point can be directly determined, so as to omit the beam training process, and improve the efficiency of beam configuration.

In another embodiment, the first communication node is a terminal. The target information for beam configuration includes first feedback information fed back from the terminal to the first access point and first location information of the first access point. The terminal transmits the first feedback information and the first location information to a current access point, the first feedback information and the first location information can be used to help the current access point to determine a possible location range of the terminal, so as to generate target beam configuration information corresponding to the current access point in a more targeted way, and improve the efficiency of beam training of the current access point.

In another embodiment, the first communication node is a terminal. The target information for beam configuration includes the first feedback information fed back from the terminal to the first access point and the first location information of the first access point. The terminal transmits the first feedback information and the first location information to a current access point, the first feedback information and the first location information can be used to help the current access point to accurately determine the location of the terminal, and the target beam configuration information of the current access point can be directly determined, so as to omit the beam training process, and improve the efficiency of beam configuration.

In another embodiment, two first communication nodes are provided, both the two first communication nodes serve as first access points, both the two first access points and a current access point need to perform beam training and collaboratively provide service to a terminal. In this embodiment, the current access point receives target information transmitted by two first access points, both target information is used to generate target beam configuration information. It can be understood that the target information transmitted by two first access points in different locations is more advantageous for the current access point to determine the location range of the terminal, which can further improve the efficiency of beam training of the current access point.

It can be understood that the first access point or terminal can transmit target information to the current access point via a wired or wireless link.

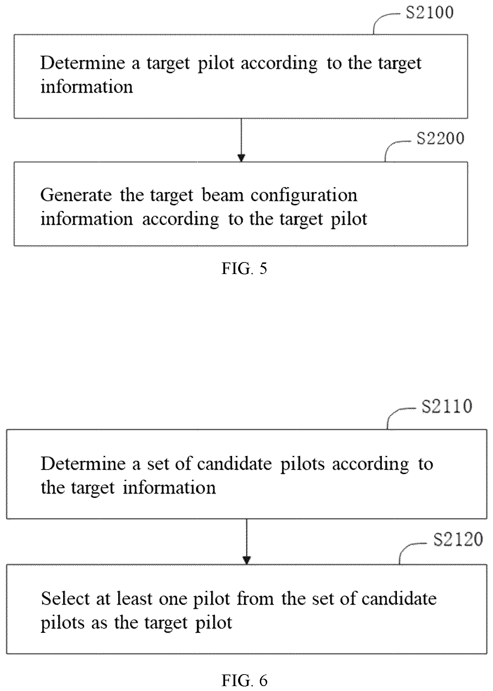

FIG. 5 is a flow chart of determining second beam configuration information provided by an embodiment of the present application. As shown in FIG. 5, at least steps S2100 and S2200 are included.

At step S2100: target pilot is determined according to the target information.

It should be illustrated that during the beam training process, each beam carries pre-defined pilot information. After receiving the beams, the terminal measures the received signal power of pilot signals in the beams to determine a beam with higher transmission performance , and then transmits feedback information that can represent the beam to a corresponding access point. Therefore, the pilot signal, which serves as a test signal during the beam training process, can be used help to determine the configuration information of beams.

In one embodiment, the current access point preliminarily determines a possible location range of the terminal according to the first location information of the first access point as well as information such as beam angle, beam direction, and beam identification in the target information, then the current access point finds the target pilot that best matches the terminal location according to the possible location range of the terminal, and transmits the target pilot via a corresponding beam.

In one embodiment, when a plurality of communication nodes transmit the target information to the access point, the current access point accurately determines the location of the terminal according to the first location information of the first access point as well as information such as beam angle, beam direction, and beam identification in the target information, so as to directly determine the target pilot, and omit the beam training process.

FIG. 6 is a flow chart of determining a target pilot provided by an embodiment of the present application. As shown in FIG. 6, at least steps S2110 and S2120 are included.

At step S2110: a set of candidate pilots is determined according to the target information.

In one embodiment, based on the target information of the first access point, only the location information of the terminal can be determined, where the location information may be either accurate information or merely a location range. When the location information is a location range, the current access point still needs to transmit a plurality of beams carrying corresponding pilots for training, and the pilots used in these training processes form a set of candidate pilots. However, since there has been a target range of the terminal, compared to transmission without a target range, the number of beams transmitted by the current access point during training is significantly reduced, and the occupied wireless resources are significantly reduced as well.

In one embodiment, a beam-pilot mapping relationship can be constructed from a historical beam training process. For example, according to final data of the historical beam training process, the structural design of buildings is relatively fixed or users have regular movement, therefore there is a certain mapping relationship between the beam identification in the target information and the determined set of pilots. As a result, such mapping relationship constructed between beams and pilots can be used in a training process in which it is inconvenient to calculate the location of a terminal by a current access point. The current access point needs not to parse a possible location range of the terminal according to the target information, instead, the current access point only needs to query pilots corresponding to the beams according to the pre-constructed beam-pilot mapping relationship and the received beam related information, beam selection information, and feedback information, determine these pilots as the set of candidate pilots, and use the set of candidate pilots for training.

At step S2120: at least one pilot is selected from the set of candidate pilots as a target pilot.

In one embodiment, each pilot in the set of candidate pilots is transmitted via its corresponding test beam, after receiving each test beam, the terminal measures the transmission performance of each test beam according to the pilot signal, and generates feedback information, the current access point can determine one target pilot according to the feedback information, and the beam carrying this target pilot is determined as the target beam for data transmission.

It can be understood that in some embodiments, the pilot with the highest received pilot signal power can be selected as the target pilot, that is, the beam with optimal transmission performance can be selected as the target beam. In other embodiments, as long as the received pilot signal power is higher than a preset power threshold, the beam that transmits qualified pilots can also be used as the target beam.

In one embodiment, after completing its own beam training, the first access point determines to use a first pilot for subsequent data transmission with the terminal, and transmits the target information including the first pilot information to other access points that have not completed beam training. At the same time, the first access point uses a first beam that carries the first pilot for communication with the terminal. In order to avoid mutual interference between the pilot for beam training of other access points and the pilot for data transmission of the first access point, the target pilot determined during the beam training process of other access points is set to be orthogonal to the first pilot.

In another embodiment, after completing its own beam training, the first access point determines to use a first pilot for subsequent data transmission with the terminal, and transmits the target information including the first pilot information to other access points that have not completed beam training, at the same time, these other access points perform their own beam training. In order to avoid mutual interference of pilots of other access point beams during the training process, a plurality of target pilots of other access points determined during the beam training process can be set to be orthogonal to each other.

At step S2200: the target beam configuration information is generated according to the target pilot.

In one embodiment, the current access point generates target beam configuration information according to the determined target pilot.

In another embodiment, after generating the target beam configuration information, the current access point further transmits the target beam configuration information to a second access point, and the second access point configures the second beam configuration information according to the received target beam configuration information.

In another embodiment, after generating the target beam configuration information, the current access point further transmits the target beam configuration information together with the target information to a second access point, and the second access point configures the second beam configuration information according to the received target beam configuration information and the target information.

It can be understood that the current access point can determine the location of the terminal more accurately with accumulation of the obtained beam configuration information from other access points ; alternatively, when the current access point can obtain fewer pilots by screening when searching for corresponding pilots according to the beam-pilot mapping relationship which essentially reduces the number of beams transmitted in subsequent beam training, and reducing the overhead of beam training.

At step S3000: beam configuration is performed according to the target beam configuration information.

In one embodiment, the current access point performs beam configuration according to the target beam configuration information, and transmits data based on beam configuration, so as to serve the terminal collaboratively with the first access point.

In one embodiment, the first access point transmits the target information for beam configuration to the second access point, such that the second access point performs beam configuration according to the target beam configuration information, and the target beam configuration information is obtained according to the target information.

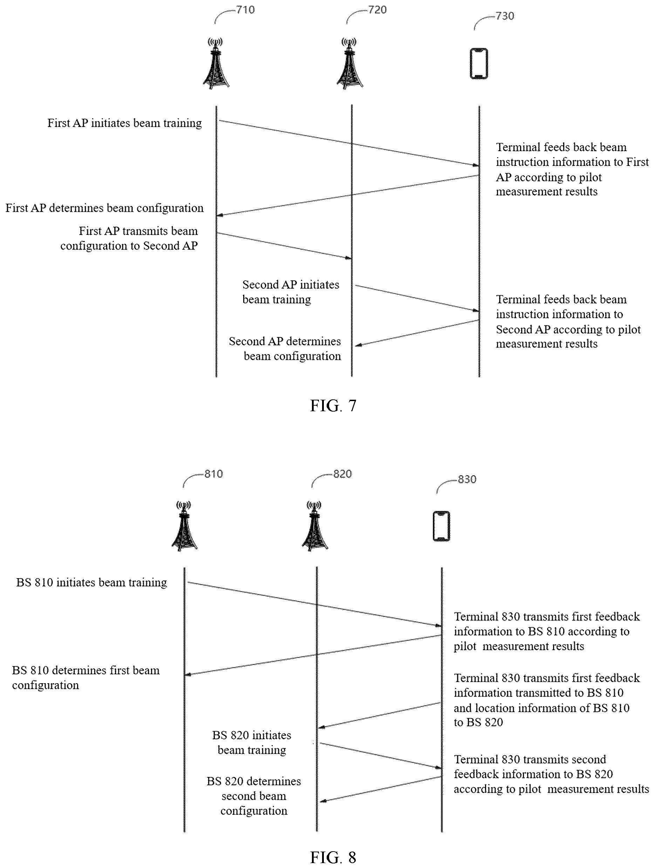

FIG. 7 is a schematic diagram of the whole process of a beam configuration method provided by an embodiment of the present application. As shown in the figure, the whole process of beam configuration method is illustrated.

A base station 710 as a first access point initiates beam training to a terminal 730, since the base station 710 is not aware of the location of the terminal 730, a plurality of training beams carrying pilot information are transmitted to the surrounding by using a beam training method in some cases. The terminal 730 receives one or more training beams transmitted by the base station 710 in a certain direction, measures the received power of pilot signals in these training beams, and feeds back beam instruction information to the base station 710 according to pilot measurement results; and the base station 710 determines first beam configuration of its own according to the received feedback information. Subsequently, the base station 710 transmits the first beam configuration information and location information of the base station 710, as target information, to a base station 720; the base station 720 as a second access point receives the first beam configuration information and the location information of the base station 710 transmitted by the base station 710, preliminarily determines a possible location range of the terminal according to the location information of the base station 710 and the beam angle information and beam direction information carried by the first beam configuration information, and configures a set of candidate pilots according to the possible location range of the terminal. The base station 720 initiates beam training, and transmits candidate pilots in the set of candidate pilots to the terminal via test beams one by one, the terminal transmits second feedback information to the base station 720 according to the pilot measurement results, and finally, the base station 720 determines the target pilot and completes beam configuration thereof.

In this embodiment, the base station 720 can configure a set of candidate pilots according to the beam-pilot mapping relationship, the set of candidate pilots can be stored locally or the latest version thereof can be downloaded by the base station 720 from a server. The beam-pilot mapping relationship is used for configuring a set of candidate pilots, which can effectively save computational resources. It can be understood that if the base station 720 can directly determine a unique target pilot according to the first beam configuration information and the location information of the base station 710, then the process for beam training by using a set of candidate pilot can be omitted, which improves the efficiency of beam configuration.

FIG. 8 is a schematic diagram of the whole process provided by another embodiment of the present application. As shown in the figure, the whole process of beam configuration method is illustrated.

Abase station 810 as a first access point initiates beam training to a terminal 830, since the base station 810 is not aware of the location of the terminal 830, a plurality of training beams carrying pilot information are transmitted to the surrounding by using a beam training method in some cases. The terminal 830 receives one or more training beams transmitted by the base station 810 in a certain direction, measures the received power of pilot signals in these training beams, and transmits the first feedback information to the base station 810 according to pilot measurement results. Subsequently, the base station 830 transmits the first feedback information, transmitted to the base station 810, to the base station 820 as the target information; the base station 820 as a second access point receives first feedback information and the location information of the base station 810 transmitted by the base station 810, preliminarily determines a possible location range of the terminal according to the location information of the base station 810 and instruction information carried by the first feedback information and used for beam selection of the base station 810, and configures a set of candidate pilots according to the possible location range of the terminal. The base station 820 initiates beam training and transmits candidate pilots in the set of candidate pilots to the terminal via test beams one by one, the terminal transmits second feedback information to the base station 820 according to the pilot measurement results, and finally, the base station 820 determines the target pilot and completes beam configuration thereof.

In this embodiment, the base station 820 can configure the set of candidate pilots according to the beam-pilot mapping relationship, the set of candidate pilots can be stored locally or the latest version thereof can be downloaded by the base station 820 from a server. The beam-pilot mapping relationship is used for configuring a set of candidate pilots, which can effectively save computational resources. It can be understood that if the base station 820 can directly determine a unique target pilot according to the first beam configuration information and the location information of the base station 810, then the process for beam training by using a set of candidate pilot can be omitted, which improves the efficiency of beam configuration.

In order to provide a more detailed explanation of the beam configuration method provided by the embodiments of the present application, the following examples are used for illustration:

### Examples:

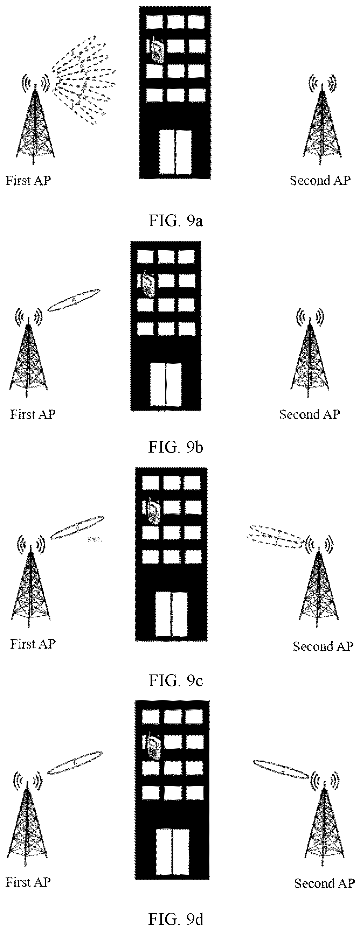

FIGS. 9a-9d are schematic diagrams of specific application scenarios of a beam configuration method provided by embodiments of the present application. Referring to FIG. 9a, a first access point configures a first set of pilots and initiates beam training, the pilots in the first set of pilots are transmitted via different training beams, the first set of pilots carries information that is transmitted by training beams and is pre-defined by both a transmitter and a receiver, and occupies a series of wireless transmission resources, including but not limited to time, frequency, etc., and during one beam training cycle, the first set of pilots is transmitted prior to the second set of pilots in the time dimension. The first access point transmits beams 1 to 8 for beam training, with each beam corresponding to a different coverage range, at this point, a second access point has not yet started beam training.

Referring to FIG. 9b, a terminal inside a building measures the pilot information carried by the beams and feeds back the measurement results to the first access point via beam instruction information, the beam instruction information includes the index, received signal power and the like of one or more beams of the first access point. The first access point finally selects the beam 6 as the transmission beam, and informs the second access point of information of the selected beam, the informed beam information includes the index of the beam and spatial angle information of the beam, and the information can be transmitted via wired links or wireless links.

Referring to FIG. 9c, the second access point can preliminarily determine a possible location range of the terminal according to the beam information informed by the first access point. According to the possible location range of the terminal, the second access point configures a second set of pilots according to possible locations of the terminal. The second set of pilots carries information that is transmitted by training beams and is pre-defined by both the transmitter and the receiver, and occupies a series of wireless transmission resources, including but not limited to time, frequency, etc., and during one beam training cycle, the second set of pilots is transmitted after the first set of pilots in time dimension. The wireless resources occupied by the second set of pilots may be much smaller than those occupied by the first set of pilots. The second access point finally determines beam 2 as the transmission beam and serves the terminal collaboratively with the first access point.

As can be clearly seen from the above figures, since the second access point generates beam configuration information thereof based on the first beam configuration information transmitted by the first access point, the configured training beams are more targeted. Compared to the first access point which requires at least 8 beams for training, the second access point only needs 2 beams to complete beam training, which greatly reduces the overhead of beam training and improves the efficiency of beam training.

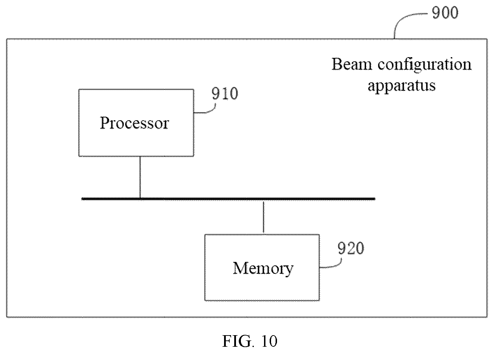

FIG. 10 is a schematic structural diagram of a beam configuration provided by one embodiment of the present application. As shown in FIG. 10, the beam configuration apparatus includes a processor 910 and a memory 920. The number of the memory 920 and the processor 910 may be one or more than one, in FIG. 9, one memory 920 and one processor 910 are taken as an example; the memory 920 and the processor 910 in a device can be connected by a bus or other ways.

The memory 920 is a computer-readable storage medium that may be used to store software programs, computer-executable programs, and modules, such as program instructions/modules corresponding to the resource determination method provided by any embodiment of the present application. The processor 910 implements the above data process method by running the software programs, instructions, and modules stored in the memory 1600.

The memory 920 can primarily include a program storage area and a data storage area, wherein the program storage area can store an operating system and an application required for at least one function. In addition, the memory 920 can include a high-speed random access memory, and can also include a non-volatile memory, such as at least one disk storage device, a flash memory device or other non-volatile solid-state storage device. In some instances, the memory 920 may further includes a memory remotely disposed relative to the processor 910, and these remote memories can be connected to the device via network. Examples of the above-mentioned network include, but are not limited to, the Internet, an intranet, a local area network, a mobile communication network, and combinations thereof.

An embodiment of the present application further provides a computer-readable storage medium storing computer-executable instructions, wherein the computer-executable instructions are used to executes the beam configuration method provided by any embodiment of the present application.

An embodiment of the present application further provides a computer program product, including a computer program or computer instruction, the computer program or computer instruction is stored in a computer-readable storage medium, a processor of a computer device reads the computer program or the computer instruction from the computer-readable storage medium, and the processor executes the computer program or the computer instruction, so that the computer device performs the beam configuration method provided by any embodiment of the present application.

The system architecture and application scenarios described in the embodiments of the present application are intended to more clearly illustrate the technical solutions of the embodiments of the present application, and do not constitute a limitation on the technical solutions provided in the embodiments of the present application. Those skilled in the art will appreciate that with evolution of the system architecture and emergence of new application scenarios, the technical solutions provided in the embodiments of the present application are equally applicable to similar technical problems.

It can be understood by those skilled in the art that all or some of the steps, systems, and functional modules/units in the systems and devices in the methods disclosed above can be implemented as software, firmware, hardware, and suitable combination thereof.

In hardware implementations, division of functional modules/units mentioned in the above description does not necessarily corresponds to the division among physical components; for example, a physical component can have a plurality of functions, or a function or step can be performed by several physical components in cooperation. Some or all of the physical components can be implemented as software to be executed by a processor, such as a central processor, digital signal processor, or microprocessor, or as hardware, or as an integrated circuit, such as an application specific integrated circuit. Such software can be distributed on computer-readable media, which can include computer storage media (or non-transitory media) and communication media (or transitory media). As is well known to those skilled in the art, the term "computer storage media" includes volatile and nonvolatile, removable and non-removable media implemented in any method or technology for storage of information (such as computer readable instructions, data structures, program modules, or other data). Computer storage media includes, but is not limited to, RAM, ROM, EEPROM, flash memory or other memory technology, CD-ROM, digital versatile discs (DVD) or other optical disk storage, magnetic cassettes, magnetic tape, magnetic disk storage or other magnetic storage devices, or any other medium which can be used to store the desired information and is accessible by a computer. In addition, as is well known to those skilled in the art, communication media typically includes computer readable instructions, data structures, program modules, or other data in a modulated data signal such as a carrier wave or other transport mechanism, and can include any information delivery media.

The terms "component", "module", "system" and the like used in this specification are used to denote a computer-related entity, hardware, firmware, a combination of hardware and software, software, or software in execution. For example, a component can be, but is not limited to, a process running on a processor, a processor, an object, an executable file, an execution thread, a program, or a computer. By way of illustration, both applications running on a computing device and a computing device can be components. One or more components can reside in a process or an execution thread, and a component can be located in a computer or distributed between two or more computers. In addition, these components can be executed from various computer-readable media having various data structures stored thereupon. Components can, for example, communicate through a local or remote process based on a signal having one or more data packets (e.g., data from two components interacting with another component between a local system, a distributed system, or a network, such as the Internet interacting with other systems through signals).

## Claims

1. A beam configuration method, comprising:
acquiring target information transmitted by a first communication node for beam configuration;
generating target beam configuration information according to the target information; and
performing beam configuration according to the target beam configuration information.

2. The beam configuration method according to claim 1, wherein generating the target beam configuration information according to the target information comprises:
determining a target pilot according to the target information; and
generating the target beam configuration information according to the target pilot.

3. The beam configuration method according to claim 2, wherein a number of the first communication node is more than one, and determining the target pilot according to the target information comprises:
directly determining the target pilot according to the target information of a plurality of the first communication nodes.

4. The beam configuration method according to claim 2, wherein determining the target pilot according to the target information comprises:
determining a set of candidate pilots according to the target information; and
selecting at least one pilot from the set of candidate pilots as the target pilot.

5. The beam configuration method according to claim 4, wherein determining the set of candidate pilots according to the target information comprises:
determining location information of a terminal according to the target information; and
determining the set of candidate pilots according to the location information of the terminal.

6. The beam configuration method according to claim 2, wherein the first communication node is a first access point, the target information comprises first beam configuration information and first location information of the first access point; and
determining the target pilot according to the target information comprises:
determining the target pilot according to the first beam configuration information and the first location information.

7. The beam configuration method according to claim 6, wherein the first beam configuration information comprises angle information and direction information of all beams configured by the first access point.

8. The beam configuration method according to claim 2, wherein the first communication node is a first access point, the target information comprises first beam selection information and first location information of the first access point; and
determining the target pilot according to the target information comprises:
determining the target pilot according to the first beam selection information and the first location information.

9. The beam configuration method according to claim 8, wherein the first beam selection information comprises angle information and direction information of a first target beam selected by the first access point; wherein the first target beam is determined according to first feedback information of a terminal.

10. The beam configuration method according to claim 2, wherein the first communication node is a terminal, the target information comprises first feedback information from the terminal to a first access point and first location information of the first access point, the first feedback information is used for instructing the first access point to perform beam selection; and
determining the target pilot according to the target information comprises:
determining the target pilot according to the first feedback information and the first location information.

11. The beam configuration method according to claim 10, wherein the first feedback information comprises beam identification information and received signal power information of the first access point.

12. The beam configuration method according to claim 4, wherein determining the set of candidate pilots according to the target information comprises:
obtaining, according to the target information and a preset beam-pilot mapping relationship, at least one candidate pilot corresponding to the target information; wherein the preset beam-pilot mapping relationship is obtained according to historical data of beam configuration; and
determining the set of candidate pilots according to the at least one candidate pilot.

13. The beam configuration method according to claim 4, wherein selecting at least one pilot from the set of candidate pilots as the target pilot comprises:
transmitting each pilot in the set of candidate pilots to a terminal via a corresponding test beam;
receiving second feedback information transmitted by the terminal according to the test beam; and
determining, according to the second feedback information, at least one pilot corresponding to a second target beam as the target pilot, wherein the second target beam is a beam of which received signal power meets a preset power threshold.

14. The beam configuration method according to claim 1, further comprising:
transmitting the target beam configuration information to a second access point, such that the second access point performs beam configuration according to second beam configuration information; wherein the second beam configuration information is obtained according to the target beam configuration information.

15. A beam configuration method, comprising:
transmitting target information for beam configuration to a second access point, such that the second access point performs beam configuration according to second beam configuration information; wherein the second beam configuration information is obtained according to the target information.

16. A beam configuration apparatus, comprising:
at least one processor; and
at least one memory for storing at least one program;
wherein the at least one programs, when executed by the at least one processor, implements the beam configuration method according to any one of claims 1 to 15.

17. A computer-readable storage medium storing a processor-executable computer program thereupon, wherein the processor-executable computer program, when executed by a processor, implements the beam configuration method according to any one of claims 1 to 15.

18. A computer program product comprising a computer program or computer instruction, wherein the computer program or the computer instruction is stored in a computer-readable storage medium, a processor of a computer device reads the computer program or the computer instruction from the computer-readable storage medium, and the processor executes the computer program or the computer instruction, such that the computer device performs the beam configuration method according to any one of claims 1 to 15.
